# EUROPÄISCHE PATENTSCHRIFT

(11) **EP 0 866 311 B1**
(45) Veröffentlichungstag und Bekanntmachung des Hinweises auf die Patenterteilung: **10.08.2005**
(21) Anmeldenummer: 98200726.2
(22) Anmeldetag: 09.03.1998
(51) Int. Cl.: G01C 21/20

(54) **Verfahren zur Ausgabe von Richtungsinformationen eines Navigationssystems**
Method for displaying directional information of a navigation system
Méthode pour afficher de l'information directionnelle d'un système de navigation

(30) Priorität: 17.03.1997 DE 19711092
(43) Veröffentlichungstag der Anmeldung: 23.09.1998
(73) Patentinhaber: Siemens Aktiengesellschaft, 80333 München (DE)
(72) Erfinder: van Roekel, Jauke, Röntgenstrasse 24, 22335 Hamburg (DE); Prins, Yntze, Röntgenstrasse 24, 22335 Hamburg (DE)

(56) Entgegenhaltungen:
- EP-A- 0 534 533
- DE-A- 3 315 613
- DE-A- 19 516 964

## Beschreibung

Die Erfindung betrifft ein Verfahren zur Ausgabe von Richtungsinformationen bezüglich einer mittels eines Navigationsssystems geplanten Fahrtroute sowie ein Fahrzeug-Navigationssystem mit einer Rechenschaltung
- zur Berechnung einer Fahrtroute
- zur Positionsbestimmung des Fahrzeugs mittels wenigstens eines Sensorsignals
und mit einer Ausgabevorrichtung zur Ausgabe der von der Rechenschaltung gelieferten Richtungsinformationen.

Ein derartiges Verfahren zur Ausgabe von Richtungsinformationen sowie ein derartiges Navigationssystem ist beispielsweise aus der EP 534 533 A1 bekannt. Bei diesem bekannten Verfahren werden die Richtungsinformationen in Form von abstrahierten Kreuzungsdarstellungen angezeigt. Die Anzeige der abstrahierten Kreuzungsdarstellungen ist insbesondere für volldigitalisierte Gebiete geeignet, d.h. für Gebiete, in denen jede einzelne Straße dieses Gebietes im Kartenspeicher des Navigationssystems gespeichert ist. Dies trifft vor allem für größere Städte zu. Kleinere Städte sowie ländliche Gebiete stehen im Kartenspeicher des Navigationssystems jedoch vielfach nur teildigitalisiert zur Verfügung, d.h. nicht jede Straße in diesem Gebiet ist im Speicher des Navigationssystems erfaßt. An Kreuzungen oder Straßenabzweigungen, die nicht vom Speicher des Navigationssystems erfaßt sind, kann es daher bei einem Fahrer eines mit einem derartigen Navigationssystem ausgestatteten Fahrzeugs zu Unklarheiten bzw. Mißverständnissen bezüglich der zu fahrenden Route kommen.

Daher ist z.B. bei dem Navigationssystem CARIN der Fa. PHILIPS zusätzlich zu der abstrahierten Kreuzungsdarstellung eine Umgebungskarte anzeigbar, die insbesondere zur Orientierung in teildigitalisierten Gebieten vorgesehen ist. Um eine derartige Umgebungskarte zufriedenstellend darstellen zu können, ist ein hochauflösender Bildschirm erforderlich.

Es ist Aufgabe der Erfindung, ein Verfahren sowie ein Navigationssystem der eingangs genannten Art zu schaffen, das einfach und kostengünstig realisierbar ist und auch in teildigitalisierten Gebieten eine einfache, zuverlässige und eindeutige Anzeige von Richtungsinformationen ermöglicht.

Diese Aufgabe ist erfindungsgemäß für ein Verfahren dadurch gelöst, daß eine erste Richtungsanzeige zur Anzeige der direkten Richtung von einer momentanen Fahrzeugposition zu einem auf der Fahrtroute liegenden, um eine Distanzfahrstrecke entlang der geplanten Fahrtroute entfernten Distanzpunkt vorgesehen ist, wobei der Distanzpunkt kontinuierlich in Abhängigkeit der Fahrzeugposition angepaßt wird.

Die erste Richtungsanzeige dient somit der Anzeige der geplanten Richtung in der nahen Umgebung der momentanen Fahrzeugposition. Hierzu wird die direkte Richtung, d.h. die Richtung entlang der Luftlinie von der jeweils aktuellen Fahrzeugposition zu einem auf der Fahrtroute liegenden Distanzpunkt angezeigt. Der Distanzpunkt liegt dabei in Fahrtrichtung vor der momentanen Fahrzeugposition und ist um eine jeweilige Distanzfahrstrecke, d.h. die Strecke entlang der geplanten Straße bzw. Route, von der jeweils momentanen Fahrzeugposition entfernt. Während der Fahrt wird der Distanzpunkt mit sich ändernder Fahrzeugposition verschoben und somit der Fahrzeugposition angepaßt.

Der Distanzpunkt liegt vorzugsweise in einer Größenordnung von ca. 50 m bis ca. 500 m entlang der geplanten Fahrtroute von der momentanen Fahrzeugposition entfernt.

Die erste Richtungsanzeige ermöglicht insbesondere in teildigitalisierten Gebieten eine ständige, kontinuierliche Anzeige der in der unmittelbaren Umgebung geplanten Fahrtrichtung. Bei zweifelhaften Kreuzungen kann der Benutzer mit einem Blick die geplante Richtung erkennen und die Fahrt in der richtigen Richtung fortsetzen. Die erste Richtungsanzeige ermöglicht dem Fahrer eine kontinuierliche Richtungsinformation, auch wenn keine aktiven Hinweise. z.B. daß er an einer Kreuzung abbiegen soll, vorliegen.

Die erste Richtungsanzeige läßt sich sehr einfach z.B. in Form eines geradlinigen Pfeiles oder in Form einer Kompaßnadel darstellen. Daher läßt sich die erste Richtungsanzeige auch auf einfachen Displays bzw. Bildschirmen, z.B. auf Monochrom-Bildschirmen, realisieren.

Eine vorteilhafte Ausgestaltung des erfindungsgemäßen Verfahrens ist dadurch gekennzeichnet, daß die Distanzfahrstrecke variierbar ist.

Eine Variation der Distanzfahrstrecke ermöglicht es, die Distanzfahrstrecke an verschiedene Parameter, z.B. Fahrzeugparameter Umgebungsparameter und Straßenparameter, anzupassen und dadurch die erste Richtungsanzeige für den Benutzer zu optimieren.

Eine weitere vorteilhafte Ausgestaltung des erfindungsgemäßen Verfahrens ist gekennzeichnet durch die Merkmale des Anspruchs 3.

Insbesondere ist es vorteilhaft, die Distanzfahrstrecke mit zunehmender Fahrzeuggeschwindigkeit zu erhöhen. Diese Erhöhung kann sowohl kontinuierlich als auch schrittweise erfolgen. Mittels einer geschwindigkeitsabhängigen Änderung der Distanzfahrstrecke ist es möglich, das Verfahren derart zu realisieren, daß das Fahrzeug den jeweiligen Distanzpunkt jeweils im wesentlichen in derselben Zeitspanne erreicht.

Dadurch ist es möglich, den Distanzpunkt an das sich mit der Fahrzeuggeschwindigkeit ändernde Blickfeld des Fahrers anzupassen. Je schneller ein Fahrzeug fährt, desto weiter wird der Fahrer seinen Blick nach vorne richten. Somit kann mittels der geschwindigkeitsabhängigen Änderung der Distanzfahrstrecke der Distanzpunkt an das der jeweiligen Fahrzeuggeschwindigkeit entsprechende Blickfeld des Fahrers angepaßt werden. Als Geschwindigkeitssensor kann z.B. der Tachometer des Fahrzeugs verwendet werden.

Eine weitere vorteilhafte Ausgestaltung der Erfindung ist gekennzeichnet durch die Merkmale des Anspruchs 4.

Unter dem Fahrbahntyp wird die jeweilige Klassifikation verstanden, unter der die einzelnen Straßen im Kartenspeicher des Navigationssystems klassifiziert sind. Als Klassifikationstypen sind z.B. Autobahnen, Bundesstraßen, Landesstraßen, Nebenstraßen und ähnliches vorgesehen. Je höher die zu erwartende Durchschnittsgeschwindigkeit auf dem jeweiligen Fahrbahntyp ist, desto größer wird vorteilhaft die Distanzfahrstrecke für diesen Fahrbahntyp gewählt. So ist beispielsweise auf Autobahnen eine hohe Durchschnittsgeschwindigkeit zu erwarten, und der Fahrbahnverlauf einer Autobahn weist normalerweise nur wenige Kurven auf. Daher ist es vorteilhaft, für Autobahnen eine große Distanzfahrstrecke vorzusehen. Dagegen ist auf einer kleinen Nebenstraße eine geringere Durchschnittsgeschwindigkeit sowie ein deutlich kurvenreicherer Verlauf der Fahrbahn zu erwarten. Deshalb ist es vorteilhaft, für den Fahrbahntyp Nebenstraße eine geringere Distanzfahrstrecke vorzusehen. Insbesondere ist es vorteilhaft, für die einzelnen, in dem Kartenspeicher abgelegten Fahrbahntypen des Navigationssystems einen Richtwert für die Distanzfahrstrecke vorzusehen und diesen in Abhängigkeit der Fahrzeuggeschwindigkeit zu verändern.

Der optimale Wert der Distanzfahrstrecke ist stark vom jeweiligen Fahrbahnverlauf abhängig. Mittels der fahrbahnabhängigen Änderung der Distanzfahrstrecke kann diese und damit die jeweilige Richtungsanzeige für den jeweiligen Fahrbahnverlauf optimiert werden. Insbesondere bei speziellen Kurvengeometrien ist es sinnvoll, die Distanzfahrstrecke verhältnismäßig klein zu wählen. Dies kann durch eine automatische Anpassung der Distanzfahrstrecke in Abhängigkeit des Fahrbahnverlaufs realisiert werden.

Beispielsweise ist es möglich, in vorgebbaren Zeitabständen die jeweiligen Winkel der ersten Richtungsanzeige in einem Speicher abzulegen und mit einer Rechenschaltung auszuwerten. Übersteigt die Winkeldifferenz zwischen einzelnen aufeinanderfolgenden Winkeln einen vorgebbaren Grenzwert, so wird automatisch die Distanzfahrstrecke erniedrigt.

Eine weitere Möglichkeit besteht darin, den Fahrbahnverlauf zwischen der momentanen Fahrzeugposition und dem momentanen Distanzpunkt auszuwerten. Hierzu ist vorgesehen, auf der Distanzfahrstrecke zwischen der momentanen Fahrzeugposition und dem momentanen Distanzpunkt jeweils in äquidistanten Abständen Unterdistanzpunkte festzusetzen und zu diesen Unterdistanzpunkten den jeweiligen Winkel der ersten Richtungsanzeige bezüglich der momentanen Fahrzeugposition zu berechnen. Übersteigt die Winkeldifferenz zwischen diesen einzelnen berechneten Winkeln einen vorgebbaren Grenzwert, so wird automatisch die Distanzfahrstrecke verkleinert.

Eine andere Möglichkeit besteht darin, für vorgebbare Kreuzungsgeometrien vorgebbare Distanzfahrstrecken vorzusehen. Bei Erkennung dieser vorgebbaren Kreuzungsgeometerien werden dann bei der Durchfahrt durch die jeweilige Kreuzung die vorgebbaren Distanzfahrstrecken für die erste Richtungsanzeige verwendet. Die Erkennung der vorgebbaren Kreuzungsgeometrien kann beispielsweise mittels eines Mustererkennungs-Algorithmusses erfolgen. Weiterhin ist es vorteilhaft, die Distanzfahrstrecke in Abhängigkeit der Fahrbahnbeschaffenheit zu verändern.

Unter Fahrbahnbeschaffenheit wird hierbei z.B. die Rauhigkeit der Fahrbahnoberfläche verstanden. Ist die Fahrbahn sehr uneben und holprig, so wird der Fahrer üblicherweise langsamer fahren und dementsprechend sich sein Blickfeld verkleinern. Daher ist es günstig, bei unebenen Fahrbahnen die Distanzfahrstrecke zu erniedrigen. Gleiches gilt, wenn die Fahrbahn naß, rutschig oder vereist ist.

Eine weitere vorteilhafte Ausgestaltung des erfindungsgemäßen Verfahrens ist dadurch gekennzeichnet, daß die Distanzfahrstrecke in Abhängigkeit der Licht- und/oder Sichtverhältnisse änderbar ist.

Fährt der Fahrer nachts, so ist sein Blickfeld auf den Ausleuchtbereich des Abblend- bzw. Fernlichtes beschränkt, und die Distanzfahrstrecke kann an diesen Abblend- bzw. Fernlichtbereich angepaßt werden, so daß der Distanzpunkt innerhalb der Sichtweite des Fahrers liegt. Außerdem ist es möglich, die Distanzfahrstrecke an andere Einschränkungen der Sichtverhältnisse, z.B. bei Nebel, anzupassen.

Als Helligkeitssensoren sind z.B. Fotodioden verwendbar. Ferner ist es möglich, den Schalter für das Abblend- bzw. Fernlicht des Fahrzeugs als Helligkeitssensor zu verwenden, und in Abhängigkeit davon, ob das Fernlicht, das Abblendlicht oder gar kein Licht eingeschaltet ist, eine vorgebbare Distanzfahrstrecke einzustellen.

Es ist weiter möglich, für die Distanzfahrstrecke einen festen Wert zu wählen.

Ein derartiger fester Wert ermöglicht eine besonders einfache Realisierung des Verfahrens. Es ist jedoch denkbar, daß der feste Wert z.B. vor der Fahrt oder bei Inbetriebnahme eines Fahrzeugs von einem Benutzer vorgegeben werden kann.

Eine weitere vorteilhafte Ausgestaltung des erfindungsgemäßen Verfahrens ist gekennzeichnet durch die Merkmale des Anspruchs 6.

Eine derartige Kombination der ersten und der zweiten Richtungsanzeige ermöglicht in Abhängigkeit von den zur Verfügung stehenden Karteninformationen eine jeweils optimale Richtungsanzeige. Die Software des jeweiligen Navigationssystems erkennt automatisch, ob die Karteninformationen für die jeweilige Fahrzeugposition in teildigitalisierter oder volldigitalisierter Form vorliegen. Liegen die Daten in teildigitalisierter Form vor, so wird vorzugsweise die erste Richtungsanzeige angezeigt, während bei volldigitalisierten Umgebungen die zweite Richtungsanzeige vorgesehen ist. Teilweise kann es auch bei volldigitalisierten Umgebungen vorteilhaft sein, zusätzlich zu der abstrahierten Kreuzungsdarstellung die erste Richtungsanzeige vorzusehen.

Falls gemäß den aktuellen Navigationsinformationen der aktuellen Straße gefolgt werden soll, kann zusätzlich zu der ersten Richtungsanzeige ein Geradeaus-Pfeil angezeigt werden.

Ein derartiger Geradeaus-Pfeil signalisiert dem Benutzer, daß das Navigationssystem derzeit keine Fahrtrichtungsänderungshinweise für ihn vorliegen hat und daß er dem gegenwärtigen Straßenverlauf folgen soll. Bei unklaren Situationen, z.B. wenn in einer scharfen Kurve eine nicht digitalisierte Abzweigung auftritt, kann der Benutzer anhand der ersten Richtungsanzeige erkennen, wie er fahren soll.

Eine weitere vorteilhafte Ausgestaltung des erfindungsgemäßen Verfahrens ist gekennzeichnet durch die Merkmale des Anspruchs 7.

Bei kreisförmigen Kreuzungen mit vielen Abzweigungen ist für den Fahrer die Orientierung innerhalb der Kreuzung mittels der zweiten Richtungsanzeige vielfach schwierig. Mit der ersten Richtungsanzeige erhält der Fahrer innerhalb der kreisförmigen Kreuzung eine zusätzliche Hilfe, um die richtige Abzweigung zu finden.

Die Aufgabe der Erfindung ist bei einem Fahrzeug-Navigationssystem dadurch gelöst, daß
- die Rechenschaltung zur Lieferung von ersten Richtungsinformationen für eine erste Richtungsanzeige an die Ausgabevorrichtung vorgesehen ist,
- die Ausgabevorrichtung zur Anzeige der ersten Richtungsanzeige vorgesehen ist, wobei die erste Richtungsanzeige die direkte Richtung von der jeweils momentanen Fahrzeugposition zu einem jeweils um eine Distanzfahrstrecke von der jeweiligen Fahrzeugposition entfernten, auf der Fahrtroute liegenden Distanzpunkt anzeigt.

Die Rechenschaltung berechnet mittels des Sensorsignals die jeweils momentane Position des Fahrzeugs. In Abhängigkeit dieser momentanen Position des Fahrzeugs wird ein Distanzpunkt von der Rechenschaltung bestimmt, der um eine Distanzfahrstrecke entlang der geplanten Fahrtroute in Fahrtrichtung von der momentanen Fahrzeugposition entfernt ist. Nun berechnet die Rechenschaltung als erste Richtungsinformation die direkte Richtung, d.h. die Richtung entlang der Luftlinie von der momentanen Fahrzeugposition zu dem Distanzpunkt. Diese erste Richtungsinformation wird von der Rechenschaltung an die Ausgabevorrichtung geliefert, welche die erste Richtungsanzeige optisch anzeigt.

Bei einer vorteilhaften Ausgestaltung des Navigationssystems ist die Rechenschaltung zur Variation der Distanzfahrstrecke vorgesehen. Eine Variation der Distanzfahrstrecke ermöglicht es, die Distanzfahrstrecke an verschiedene Parameter, z.B. Fahrzeugpararneter, Umgebungsparameter und Straßenparameter, anzupassen und dadurch die erste Richtungsanzeige für den Benutzer zu optimieren.

Der optimale Wert der Distanzfahrstrecke ist stark vom jeweiligen Fahrbahnverlauf abhängig und kann durch eine softwaremäßig in der Rechenschaltung durchgeführte automatische Anpassung der Distanzfahrstrecke eingestellt werden. Beispielsweise ist es möglich, in vorgebbaren Zeitabständen die jeweiligen Winkel der ersten Richtungsanzeige in einem Speicher abzulegen und mittels der Rechenschaltung auszuwerten. Übersteigt die Winkeldifferenz zwischen einzelnen aufeinanderfolgenden Winkeln einen vorgebbaren Grenzwert, so wird von der Rechenschaltung automatisch die Distanzfahrstrecke erniedrigt. Des weiteren ist es vorteilhaft, daß in die Rechenschaltung ein Mustererkennungs-Algorithmus implementiert ist, der automatisch bei Erkennung von vorgebbaren Kreuzungsgeometerien vorgebbare, z.B. in einem Speicher des Navigationssystems abgelegte Distanzfahrstrecken verwendet. Eine andere Möglichkeit besteht darin, daß die in einer Kartenspeichereinheit des Navigationssystems gespeicherten Karteninformationen für vorgebbare Kreuzungen bzw. Straßenverläufe als Zusatz-Informationen jeweils die für diese Kreuzung bzw. diesen Straßenverlauf optimalen Distanzfahrstrecken aufweisen.

Ferner ist es vorteilhaft, daß der Rechenschaltung mittels einer Eingabevorrichtung von einem Benutzer ein Vorgabewert für die Distanzfahrstrecke vorgebbar ist. Mittels eines solchen, von dem Benutzer eingebbaren Vorgabewertes kann jeder Fahrer die erste Richtungsanzeige an seine individuellen Bedürfnisse anpassen.

Eine weitere vorteilhafte Ausgestaltung des Navigationssystems ist gekennzeichnet durch die Merkmales des Anspruchs 9.

Eine derartige Kombination der ersten und der zweiten Richtungsanzeige ermöglicht es, in Abhängigkeit der in der Kartenspeichereinheit des Navigationssystems zur Verfügung stehenden Karteninformationen dem Benutzer eine jeweils optimale Richtungsanzeige zu bieten. Die Software der Rechenschaltung erkennt automatisch, ob die ihr von der Kartenspeichereinheit gelieferten Karteninformationen für die jeweilige Fahrzeugposition in teildigitalisierter oder volldigitalisierter Form vorliegen. Liegen die Daten in teildigitalisierter Form vor, so werden von der Rechenschaltung vorzugsweise die ersten Richtungsinformationen an die Ausgabevorrichtung geliefert, und die erste Richtungsanzeige wird von der Ausgabevorrichtung angezeigt, während bei volldigitalisierten Umgebungen die zweite Richtungsanzeige vorgesehen ist. Teilweise kann es auch bei volldigitalisierten Umgebungen vorteilhaft sein, zusätzlich zu der abstrahierten Kreuzungsdarstellung die erste Richtungsanzeige mittels der Ausgabevorrichtung anzuzeigen.
Die erste Richtungsanzeige läßt sich sehr einfach z.B. in Form eines geradlinigen Pfeils oder in Form einer Kompaßnadel darstellen. Daher läßt sich die erste Richtungsanzeige auch auf Bildschirmen mit einer geringen Auflösung, z.B. auf Monochrom-Bildschirmen mit einer Auflösung von 64x120 Pixeln darstellen. Damit lassen sich sehr kostengünstige Navigationssystem realisieren. Insbesondere ist es möglich, für die erste Richtungsanzeige ein separates Display am Lenkrad des Fahrzeuges anzuordnen. Ein derartiges Display kann quasi im Blickfeld des Fahrers angeordnet werden. Der Fahrer kann mittels eines derartigen Displays sehr schnell die ersten Richtungsinformationen aufnehmen, ohne seinen Blick von der Fahrbahn abwenden zu müssen.

Einige schematisch dargestellte Ausführungsbeispiele der Erfindung werden nachfolgend anhand der Zeichnung in den Fig. 1 bis 7 näher erläutert. Es zeigen:
Fig. 1 ein Blockschaltbild eines Navigationssystems für ein Landfahrzeug mit einer Rechenschaltung und mit einer Ausgabevorrichtung zur Ausgabe von von der Rechenschaltung gelieferten Richtungsinformationen,
Fig. 2 eine schematische Darstellung zur Veranschaulichung der Bestimmung einer ersten Richtungsanzeige mit einer Fahrtroute, einem sich an einer momentanen Fahrzeugposition befindlichen Fahrzeug, einem auf der Fahrtroute liegenden, um eine Distanzfahrstrecke entlang der geplanten Fahrtroute entfernten Distanzpunkt sowie der dazu gehörigen ersten Richtungsanzeige,
Fig. 3 eine Fahrtroute mit vier momentanen Fahrzeugpositionen sowie der jeweils zugeordneten ersten Richtungsanzeige,
Fig. 4 ein weiteres Beispiel für eine geplante Fahrtroute mit einer momentanen Fahrzeugposition und der der momentanen Fahrzeugposition zugeordneten ersten Richtungsanzeige, wobei in einer Kurve der geplanten Fahrtroute eine nicht digitalisierte Straße abzweigt,
Fig. 5 ein weiteres Beispiel für eine geplante Fahrtroute mit vier momentanen Fahrzeugpositionen und vier den momentanen Fahrzeugpositionen zugeordneten ersten Richtungsanzeigen, wobei die geplante Fahrtroute entlang einer kreisförmigen Kreuzung mit fünf Abzweigungen verläuft,
Fig. 6 eine geplante Fahrtroute, welche zunächst geradlinig verläuft, in einem sich daran anschließenden Bereich einige Kurven aufweist und schließlich wieder geradlinig verläuft, wobei die Distanzfahrstrecke fahrbahnverlaufsabhängig in dem kurvenförmigen Bereich erniedrigt wird,
Fig. 7 eine Tabelle mit sieben verschiedenen Fahrbahntypen A bis G, denen jeweils ein Normalwert für die Distanzfahrstrecke in Metern zugeordnet ist.

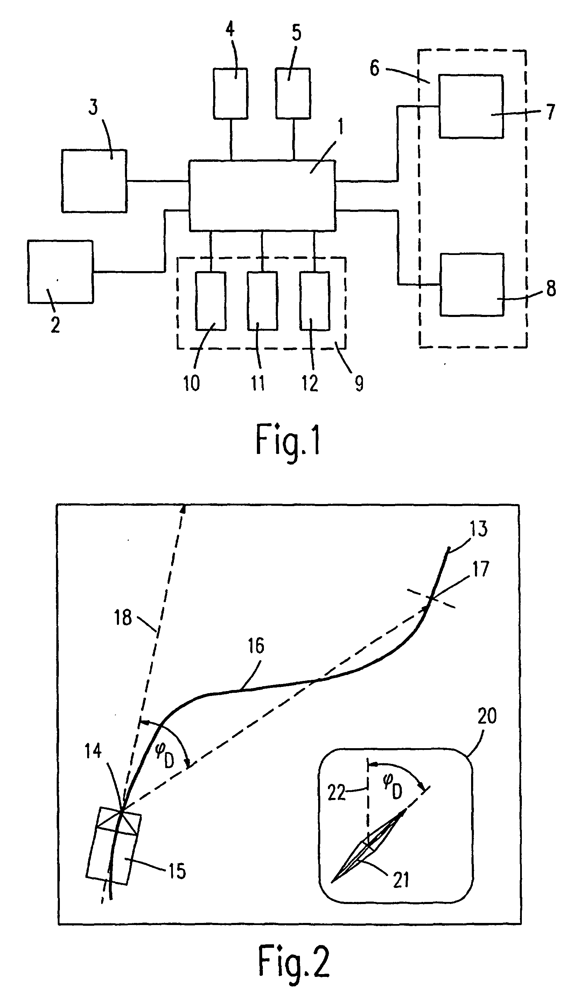

Fig. 1 zeigt ein Blockschaltbild eines Ausführungsbeispiels eines erfindungsgemäßen Navigationssystems, in welchem das erfindungsgemäße Verfahren realisiert ist. Das in Fig. 1 dargestellte Navigationssystem weist als zentrales Element eine Rechenschaltung 1 auf, welche mit einer Bedienvorrichtung 2, einer Kartenspeichereinheit 3, einem RDS/TMC-Empfänger 4 sowie einem GSM-Modul 5 gekoppelt ist. Die Bedienvorrichtung 2 kann beispielsweise mittels einer Tastatur, eines Trackballs oder eines berührungssensitiven Bildschirms (Touch Sreen) realisiert werden. Die Kartenspeichereinheit 3 kann beispielsweise mittels eines CD-ROM-Laufwerkes realisiert werden, wobei die Karteninformationen auf einer oder mehreren CD-ROM's abgespeichert sind. Der RDS/TMC-Empfänger 4 dient dem Empfang von Verkehrsinformationen. Mittels des GSM-Moduls können sowohl Verkehrsinformationen, die nach dem GSM-Standard übertragen werden, empfangen werden, als auch Telefongespräche durchgeführt werden.

Es ist eine Ausgabevorrichtung 6 vorgesehen, die ein optisches Ausgabemodul 7 und ein akustisches Ausgabemodul 8 umfaßt. Sowohl das optische Ausgabemodul 7 als auch das akustische Ausgabemodul 8 sind mit der Rechenschaltung 1 gekoppelt. Es ist eine Sensoreinheit 9 vorgesehen, die Radsensoren 10, einen elektronischen Kompaß 11 sowie eine GPS-Empfangseinheit 12 aufweist. Die Radsensoren 10, der Kompaß 11 und die GPS-Empfangseinheit 12 sind jeweils mit der Rechenschaltung 1 gekoppelt. Die Radsensoren 10 liefern Informationen von dem linken und dem rechten Rad des Fahrzeuges, entweder von den Vorderrädern oder von den Hinterrädern. Die Information der Radsensoren, die diese an die Rechenschaltung übertragen, betrifft sowohl die vom Fahrzeug gefahrene Entfernung als auch Richtungsänderungen infolge von unterschiedlich zurückgelegten Wegen des linken und des rechten Rades. Der elektronische Kompaß 11 liefert Winkelinformationen an die Rechenschaltung 1. Die GPS-Empfangseinheit 12 liefert Positionsinformationen über die gegenwärtige Position des Fahrzeuges an die Rechenschaltung 1. Aus den Informationen der Kartenspeichereinheit 3, der Radsensoren 10, des Kompasses 11 und der GPS-Empfangseinheit 12 berechnet die Rechenschaltung 1 die aktuelle Position des Fahrzeuges. Die Rechenschaltung 1 liefert in Abhängigkeit der aktuellen Fahrzeugposition Richtungsinformationen an die Ausgabevorrichtung 6, welche die Richtungsinformationen optisch und/oder akustisch dem Fahrer übermittelt. Es ist möglich, auf die GPS-Empfangseinheit 12 zu verzichten und das Navigationssystem nur mit der Kartenspeichereinheit 3, den Radsensoren 10 und dem Kompaß 11 zu betreiben.

Fig. 2 zeigt eine geplante Fahrtroute 13 mit einem sich an einer momentanen Fahrzeugposition 14 befindlichen Fahrzeug 15. Um eine Distanzfahrstrecke 16 entlang der Fahrtroute 13 von der momentanen Fahrzeugposition 14 entfernt befindet sich ein Distanzpunkt 17. In Richtung der Fahrzeuglängsachse des Fahrzeuges 15 erstreckt sich ein Fahrzeuglängsrichtungspfeil 18. Von der momentanen Fahrzeugposition 14 zu dem Distanzpunkt 17 erstreckt sich ein Distanzpunkt-Richtungspfeil 19. Der Fahrzeuglängsrichtungspfeil 18 und der Distanzpunkt-Richtungspfeil 19 erstrecken sich zueinander in einem Distanzpunkt-Richtungswinkel ϕ_{D}. Dieser momentanen Fahrzeugposition 14 und dem zugehörigen Distanzpunkt 17 ist eine erste Richtungsanzeige 20 in Form einer Kompaßnadel 21 zugeordnet. Diese erste Richtungsanzeige 20 wird auf dem optischen Ausgabemodul 7 der Ausgabevorrichtung 6 gemäß Fig. 1 angezeigt. Die Kompaßnadel 21 der ersten Richtungsanzeige 20 ist um den Distanzpunkt-Richtungswinkel ϕ_{D} gegenüber der vertikalen Richtung 22 geneigt.

Der Distanzpunkt-Richtungswinkel ϕ_{D} wird von der Rechenschaltung 1 berechnet und als erste Richtungsinformation an die Ausgabevorrichtung 6 geliefert.

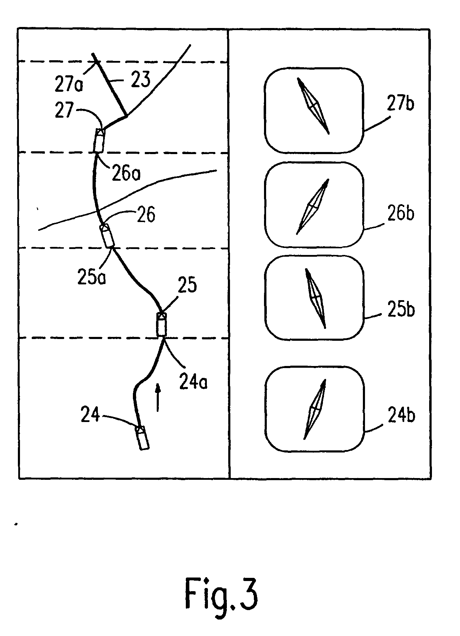

Fig. 3 zeigt eine Fahrtroute 23 mit vier verschiedenen momentanen Fahrzeugpositionen 24, 25, 26 bzw. 27 und vier diesen Fahrzeugpositionen zugeordneten Distanzpunkten 24a, 25a, 26a bzw. 27a. Zu jeder einzelnen dieser vier momentanen Fahrzeugpositionen 24, 25, 26 sowie 27 ist die jeweils zugehörige erste Richtungsanzeige 24b, 25b, 26b bzw. 27b dargestellt.

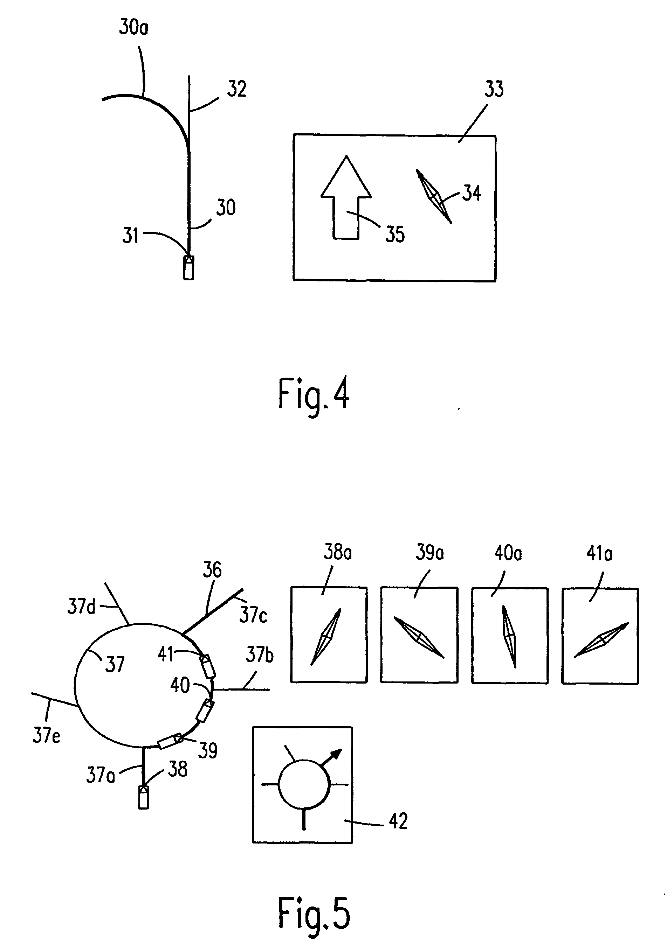

Fig. 4 zeigt den Verlauf einer Fahrtroute 30, die eine scharfe Linkskurve 30a aufweist. Das Fahrzeug befindet sich an der momentanen Fahrzeugposition 31 vor der Linkskurve 30a. Am Anfang der scharfen Linkskurve 30a verläuft eine Nebenstraße 32 im wesentlichen geradeaus weiter. Diese Nebenstraße 32 ist nicht digitalisiert, d.h. in der Kartenspeichereinheit 3 gemäß Fig. 1 sind über diese Nebenstraße 32 keine Informationen vorhanden, und demgemäß können von der Kartenspeichereinheit 3 gemäß Fig. 1 auch keine Informationen über diese Nebenstraße 32 an die Rechenschaltung 1 gemäß Fig. 1 übermittelt werden.

Der momentanen Fahrzeugposition 31 ist eine Bildschirmanzeige 33 zugeordnet, die zur Anzeige auf dem optischen Ausgabemodul 7 gemäß Fig. 1 vorgesehen ist. Die Bildschirmanzeige 33 weist eine erste Richtungsanzeige 34 und als zweite Richtungsanzeige einen Geradeaus-Pfeil 35 auf. Der Geradeaus-Pfeil 35 signalisiert dem Fahrer, daß derzeit keine Fahrtrichtungsänderungshinweise vorliegen und er auf der gegenwärtigen Straße bleiben soll. Da das Navigationssystem die Nebenstraße 32 nicht kennt, erfolgt vor der Linkskurve 32 auch kein expliziter akustischer Hinweis, daß der Fahrer nach links fahren soll.
Mittels der ersten Richtungsanzeige 34 kann sich der Fahrer jedoch Klarheit darüber verschaffen, daß er der Linkskurve 30a folgen soll und nicht geradeaus weiter entlang der nicht digitalisierten Nebenstraße 32 weiterfahren soll.

Fig. 5 zeigt eine geplante Fahrtroute 36, welche an einer kreisförmigen Kreuzung 37 mit fünf Abzweigungen 37a, 37b, 37c, 37d und 37e vorbeiführt. In der Fig. 5 sind vier momentane Fahrzeugpositionen 38, 39, 40 und 41 dargestellt. Diesen vier momentanen Fahrzeugpositionen 38, 39, 40 und 41 sind jeweils die ersten Richtungsanzeigen 38a, 39a 40a sowie 41a zugeordnet. Zusätzlich zu den ersten Richtungsanzeigen 38a, 39a, 40a sowie 41a ist eine zweite Richtungsanzeige 42 vorgesehen, welche eine abstrahierte Kreuzungsdarstellung der kreisförmigen Kreuzung 37 anzeigt. Die geplante Fahrtroute ist auf dieser zweiten Richtungsanzeige 42 optisch hervorgehoben. Die zweite Richtungsanzeige 42 ändert sich während der Fahrt durch die kreisförmige Kreuzung 37 nicht und wird jeweils bei allen vier momentanen Fahrzeugpositionen 38, 39, 40 und 41 statisch angezeigt, während die ersten Richtungsanzeigen 38a, 39a, 40a und 41a jeweils nachfolgend entsprechend der jeweiligen momentanen Fahrzeugposition angezeigt werden. Fährt ein Benutzer nun auf die kreisförmige Kreuzung 37 zu, so kann er sich zunächst mittels der zweiten Richtungsanzeige 42 einen Überblick über die sich vor ihm befindliche kreisförmige Kreuzung 37 verschaffen und sich die geplante Fahrtroute 36 ansehen. Fährt er dann in die kreisförmige Kreuzung 37 ein, kann er sich vorzugsweise mittels der jeweils aktuellen ersten Richtungsanzeige 38a, 39a, 40a bzw. 41a orientieren und so die richtige Abzweigung 37c auffinden.

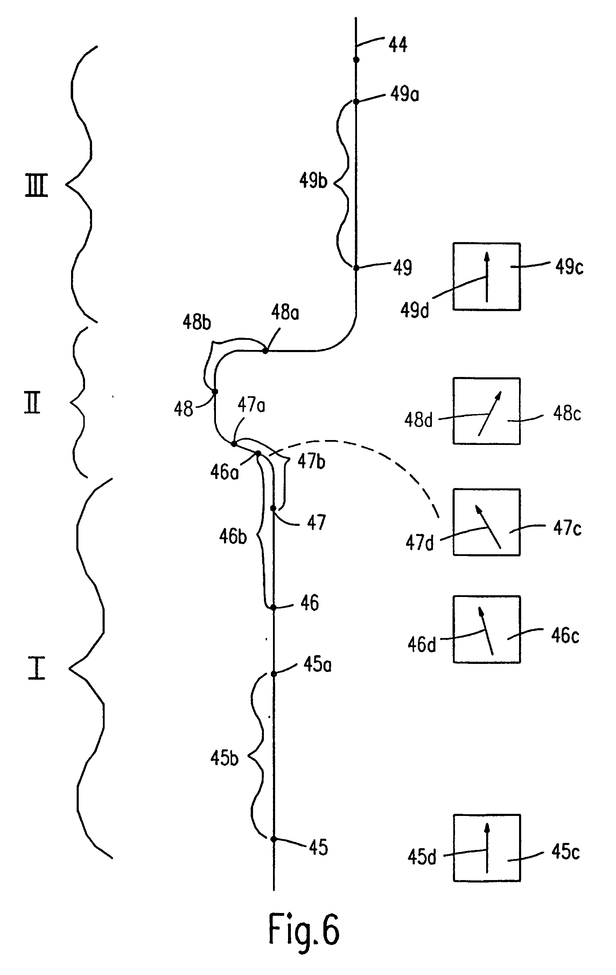

Fig. 6 zeigt eine geplante Fahrtroute 44, welche zunächst in einem Bereich I geradlinig verläuft, in einem sich daran anschließenden Bereich II einige Kurven aufweist und schließlich in einem Bereich III wieder geradlinig verläuft. Anhand dieser geplanten Fahrtroute 44 wird eine fahrbahnverlaufsabhängige Änderung der Distanzfahrstrecke erläutert. Zunächst befindet sich ein nicht näher dargestelltes Fahrzeug an der momentanen Fahrzeugposition 45 am Anfang des geradlinigen Bereiches I. Dieser momentanen Fahrzeugposition 45 ist ein Distanzpunkt 45a zugeordnet, der um die Distanzfahrstrecke 45b entlang der geplanten Fahrtroute 44 von der momentanen Fahrzeugposition 45 entfernt ist. Der momentanen Fahrzeugposition 45 ist eine erste Richtungsanzeige 45c mit einem sich in vertikaler Richtung erstreckenden Richtungspfeil 45d zugeordnet. Die Distanzfahrstrecke 45b ist ein für den jeweiligen Fahrbahntyp der Fahrtroute 44 vorgebbarer Distanzfahrstrecken-Normalwert, der z.B. in einem Speicher der Recheneinheit 1 abgespeichert ist. Dieser Distanzfahrstrecken-Normalwert wird immer dann für die Distanzfahrstrecke verwendet, wenn der jeweilige Straßenverlauf im wesentlichen geradlinig ist und sich die Geschwindigkeit des Fahrzeugs in einem vorgebbaren Geschwindigkeitsbereich befindet.

Dem Routenverlauf der Fahrtroute 44 folgend gelangt das Fahrzeug an die momentane Fahrzeugposition 46, der der um die Distanzfahrstrecke 46b entfernte Distanzpunkt 46a zugeordnet ist. Die Distanzfahrstrecke 46b ist im wesentlichen gleich groß wie die Distanzfahrstrecke 45b. Der Distanzpunkt 46a liegt am Anfang einer Linkskurve. Dementsprechend ist der Richtungspfeil 46d der der momentanen Fahrzeugposition 46 zugeordneten ersten Richtungsanzeige 46c etwas nach links gegenüber der vertikalen Richtung gerichtet. Die Rechenschaltung 1 erkennt diese Winkelabweichung gegenüber der vertikalen Richtung und verkleinert nachfolgend automatisch die Distanzfahrstrecke, wenn der Betrag der Winkelabweichung während einer vorgebbaren Mindestfahrstrecke einen vorgebbaren Grenzwert überschreitet. Dies ist an der momentanen Fahrzeugposition 47 zu erkennen, deren zugeordneter Distanzpunkt 47a um die Distanzfahrstrecke 47b entfernt ist. Die Distanzfahrstrecke 47b ist von der Rechenschaltung 1 automatisch verkleinert worden und nur noch etwa halb so groß wie die Distanzfahrstrecken 45b und 46b. Die der momentanen Fahrzeugposition 47 zugeordnete erste Richtungsanzeige 47c weist einen Richtungspfeil 47d auf, der um ca. 45° gegenüber der Vertikalen geneigt ist. Mittels dieser Verkleinerung der Distanzfahrstrecke kann dem Fahrer der kurvenförmige Verlauf der Fahrtroute 44 in dem Bereich II mittels der ersten Richtungsanzeige in geeigneter Weise angezeigt werden. Von der Rechenschaltung 1 wird kontinuierlich oder in diskreten Abständen geprüft, ob die Beträge der Winkelabweichungen gegenüber der vertikalen Richtung während der vorgebbaren Mindestfahrstrecke noch oberhalb des vorgebbaren Grenzwertes liegen. Im kurvenförmigen Bereich II der Fahrtroute 44 ist dies der Fall, und dementsprechend wird weiterhin der kleine Wert für die Distanzfahrstrecke verwendet. So ist beispielsweise der der momentanen Fahrzeugposition 48 zugeordnete Distanzpunkt 48a um die Distanzfahrstrecke 48b von der momentanen Fahrzeugposition 48 entfernt. Diese Distanzfahrstrecke 48b entspricht im wesentlichen der Distanzfahrstrecke 47b und ist in etwa halb so groß wie die Distanzfahrstrecken 45b und 46b. Der Richtungspfeil 48d der der momentanen Fahrzeugposition 48 zugeordneten ersten Richtungsanzeige 48 ist um ca. 45° nach rechts gegenüber der vertikalen Richtung geneigt. Verläßt das Fahrzeug den kurvenförmigen Bereich II und gelangt in den geradlinigen Bereich III, so erkennt die Rechenschaltung 1 gemäß Fig. 1, daß die erste Richtungsanzeige sich wieder auf die vertikale Richtung einstellt und den vorgebbaren Grenzwert für die Winkelabweichung unterschreitet. Bleibt der vorgebbare Grenzwert für die Winkelabweichung während der vorgebbaren Mindestfahrstecke unterschritten, so wird die Distanzfahrstrecke wieder auf den vorgebbaren Normalwert für den jeweiligen Fahrbahntyp erhöht. So ist der momentanen Fahrzeugposition 49 der Distanzpunkt 49a zugeordnet, welcher um die Distanzfahrstrecke 49b von der momentanen Fahrzeugposition 49 entfernt ist. Die Distanzfahrstrecke 49b entspricht den Distanzfahrstrecken 45b und 46b. Der Richtungspfeil 49d der der momentanen Fahrzeugposition 49 zugeordneten ersten Richtungsanzeige 49c weist in die vertikale Richtung.

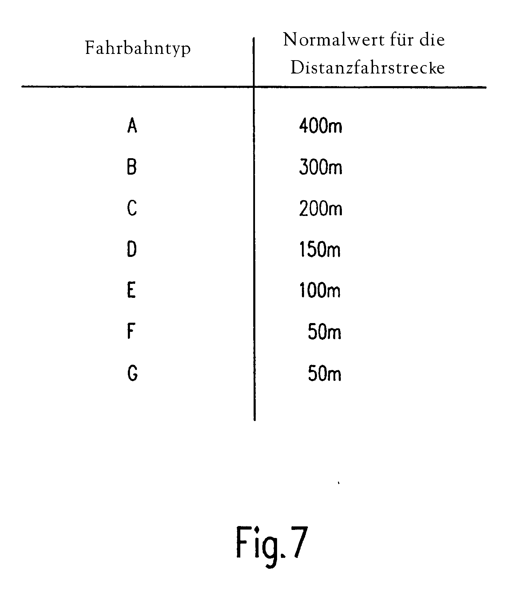

Fig. 7 zeigt eine Tabelle mit sieben verschiedenen Fahrbahntypen A bis G, denen jeweils ein Normalwert für die Distanzfahrstrecke in Metern zugeordnet ist. Die Fahrbahntypen A bis G sind nach zu erwartender Durchschnittsgeschwindigkeit klassifiziert und jeweils den in der Kartenspeichereinheit 3 gemäß Fig. 1 gespeicherten Straßen zugeordnet. Der Fahrbahntyp A repräsentiert Autobahnen, der Fahrbahntyp B Bundesstraßen, der Fahrbahntyp C gut ausgebaute Landstraßen, der Fahrbahntyp D mittelgut ausgebaute Landstraßen, der Fahrbahntyp E schlecht ausgebaute Landstraßen und die Fahrbahntypen F und G innerstädtische Straßen.

Die den jeweiligen Fahrbahntypen A bis G zugeordneten Normalwerte für die Distanzfahrstrecken werden vorteilhaft verwendet, wenn der momentane Straßenverlauf geradlinig ist und sich die Geschwindigkeit des Fahrzeugs innerhalb eines vorgebbaren Geschwindigkeits-Normalbereiches befindet. Fährt das Fahrzeug schneller, so erkennt dies die Rechenschaltung 1 gemäß Fig. 1 anhand von der Rechenschaltung 1 zugeführten Geschwindigkeitsinformationen, und der Wert für die Distanzfahrstrecke wird kontinuierlich oder schrittweise bis auf einen Maximalwert erhöht. Weist das Fahrzeug eine Geschwindigkeit unterhalb des Geschwindigkeits-Normalbereiches auf, so wird die Distanzfahrstrecke kontinuierlich oder in Schritten bis auf einen vorgebbaren Minimalwert erniedrigt. Zusätzlich zu der geschwindigkeitsabhängigen Änderung des Normalwertes für die Distanzfahrstrecke ist vorteilhaft die fahrbahnverlaufsabhängige Änderung des Normalwertes für die Distanzfahrstrecke vorgesehen, wie bereits in der Fig. 6 beschrieben.

## Patentansprüche

1. Verfahren zur Ausgabe von Richtungsinformationen bezüglich einer mittels eines Navigationsssystems geplanten Fahrtroute, **dadurch gekennzeichnet, daß** eine erste Richtungsanzeige zur Anzeige der direkten Richtung von einer momentanen Fahrzeugposition zu einem auf der Fahrtroute liegenden, um eine Distanzfahrstrecke entlang der geplanten Fahrtroute entfernten Distanzpunkt vorgesehen ist, wobei der Distanzpunkt kontinuierlich in Abhängigkeit der **Fahrzeugposition angepaßt wird.**

2. Verfahren nach Anspruch 1, **dadurch gekennzeichnet, daß** die Distanzfahrstrecke variierbar ist.

3. Verfahren nach Anspruch 1, **dadurch gekennzeichnet, daß** daß die Distanzfahrstrecke zwischen der Fahrzeugposition und dem Distanzpunkt in Abhängigkeit von der Fahrzeuggeschwindigkeit änderbar ist.

4. Verfahren nach Anspruch 1, **dadurch gekennzeichnet, daß** die Distanzfahrstrecke zwischen der Fahrzeugposition und dem Distanzpunkt in in Abhängigkeit von Fahrbahnparametern, insbesondere in Abhängigkeit des Fahrbahntyps, des Fahrbahnverlaufs und/oder der Fahrbahnbeschaffenheit, änderbar ist.

5. Verfahren nach Anspruch 1, **dadurch gekennzeichnet, daß** die Distanzfahrstrecke in Abhängigkeit der Licht- und/oder Sichtverhältnisse änderbar ist.

6. Verfahren nach Anspruch 1, **dadurch gekennzeichnet, daß** eine zweite Richtungsanzeige zur Anzeige von abstrahierten Kreuzungsdarstellungen vorgesehen ist,
daß in Abhängigkeit der für die Umgebung der jeweiligen Fahrzeugposition zur Verfügung stehenden Navigationsinformationen die erste und/oder die zweite Richtungsanzeige zur Führung verwendet wird, wobei
die erste Richtungsanzeige insbesondere zur Führung in teildigitalisierten Umgebungen und die zweite Richtungsanzeige insbesondere zur Führung in volldigitalisierten Umgebungen vorgesehen ist.

7. Verfahren nach Anspruch 1, **dadurch gekennzeichnet, daß** zur Führung bei vorgebbaren Straßenverläufen, insbesondere bei kreisförmigen Kreuzungen mit mehreren Abzweigungen, die erste und die zweite Richtungsanzeige gleichzeitig angezeigt werden.

8. Fahrzeug-Navigationssystem mit einer Rechenschaltung
- zur Berechnung einer Fahrtroute
- zur Positionsbestimmung des Fahrzeugs mittels wenigstens eines Sensorsignals
und mit einer Ausgabevorrichtung zur Ausgabe der von der Rechenschaltung gelieferten Richtungsinformationen, **dadurch gekennzeichnet, daß**
- die Rechenschaltung zur Lieferung von ersten Richtungsinformationen für eine erste Richtungsanzeige an die Ausgabevorrichtung vorgesehen ist,
- die Ausgabevorrichtung zur Anzeige der ersten Richtungsanzeige vorgesehen ist, wobei die erste Richtungsanzeige die direkte Richtung von der jeweils momentanen Fahrzeugposition zu einem jeweils um eine Distanzfahrstrecke von der jeweiligen Fahrzeugposition entfernten, auf der Fahrtroute liegenden Distanzpunkt anzeigt.

9. Fahrzeugnavigationssystem nach Anspruch 8, **dadurch gekennzeichnet, daß** die Rechenschaltung zur Lieferung von zweiten, abstrahierte Kreuzungsdarstellungen für eine zweite Richtungsanzeige enthaltende Richtungsinformationen an die Ausgabevorrichtung vorgesehen ist, daß die Rechenschaltung in Abhängigkeit der für die Umgebung der jeweiligen Fahrzeugposition zur Verfügung stehenden Navigationsinformationen die ersten und/oder die zweiten Richtungsinformationen an die Ausgabevorrichtung liefert, daß die Ausgabevorrichtung dementsprechend zur Anzeige der ersten und/oder der zweiten Richtungsanzeige vorgesehen ist, wobei die erste Richtungsanzeige insbesondere zur Führung in teildigitalisierten Umgebungen und die zweite Richtungsanzeige insbesondere zur Führung in volldigitalisierten Umgebungen vorgesehen ist.

10. Fahrzeug mit einem Navigationsystem nach Anspruch 8.

## Claims

1. Method for outputting direction information relating to a route which has been planned by means of a navigation system, **characterized in that** a first direction indication is provided in order to indicate the direct direction from an instantaneous vehicle position to a distant point which is on the route and is at a specific distance along the planned route, with the distant point being continuously adapted as a function of the vehicle position.

2. Method according to Claim 1, **characterized in that** the specific distance is variable.

3. Method according to Claim 1, **characterized in that** the specific distance can be varied between the vehicle position and the distant point as a function of the vehicle speed.

4. Method according to Claim 1, **characterized in that** the specific distance can be varied between the vehicle position and the distant point as a function of roadway parameters, in particular as a function of the roadway type, the roadway profile and/or the roadway condition.

5. Method according to Claim 1, **characterized in that** the specific distance can be varied as a function of the lighting and/or visual conditions.

6. Method according to Claim 1, **characterized in that** a second direction indication is provided in order to indicate abstracted crossing representations,
**in that** the first and/or the second direction indication is used for guidance as a function of the navigation information which is available for the area surrounding the respective vehicle position, with
the first direction indication being intended in particular for guidance in partially digitized environments, and the second direction indication being intended in particular for guidance in fully digitized environments.

7. Method according to Claim 1, **characterized in that** the first and the second direction indication are displayed at the same time for guidance in the case of predeterminable road sections, in particular in the case of roundabouts with a number of turnings.

8. Vehicle navigation system having a computation circuit
- for calculation of a route
- for finding the position of the vehicle by means of at least one sensor signal
and having an output apparatus for outputting the direction information produced by the computation circuit, **characterized in that**
- the computation circuit is intended to supply first direction information for a first direction indication to the output apparatus,
- the output apparatus is intended to display the first direction indication, with the first direction indication indicating the direct direction from the respective instantaneous vehicle position to a distant point which is on the route and is in each case at a specific distance from the respective vehicle position.

9. Vehicle navigation system according to Claim 8, **characterized in that** the computation circuit is intended to supply second, abstracted crossing representations for direction information which contains a second direction indication to the output apparatus,
**in that** the computation circuit supplies the first and/or the second direction information to the output apparatus as a function of the navigation information which is available for the area surrounding the respective vehicle position,
**in that** the output apparatus is intended in a corresponding manner to display the first and/or the second direction indication, with the first direction indication being intended in particular for guidance in partially digitized environments, and the second direction indication being intended in particular for guidance in fully digitized environments.

10. Vehicle having a navigation system according to Claim 8.

## Revendications

1. Procédé permettant d'éditer des informations concernant la direction et relatives à un itinéraire planifié au moyen d'un système de navigation **caractérisé par le fait qu'**il est prévu un premier affichage de direction destiné à indiquer la direction en ligne droite, à partir d'une position momentanée du véhicule, vers un point de référence distant se trouvant sur l'itinéraire et éloigné d'un trajet d'écartement le long de l'itinéraire planifié, le point de référence distant étant continuellement adapté en fonction de la position du véhicule.

2. Procédé selon la revendication 1 **caractérisé par le fait que** la longueur du trajet d'écartement est variable.

3. Procédé selon la revendication 1 **caractérisé par le fait que** la longueur du trajet d'écartement entre la position du véhicule et le point de référence distant peut être modifiée en fonction de la vitesse du véhicule.

4. Procédé selon la revendication 1 **caractérisé par le fait que** la longueur du trajet d'écartement entre la position du véhicule et le point de référence distant peut être modifiée en fonction de paramètres de la voie de circulation, notamment, en fonction du type de voie de circulation, du tracé de la voie de circulation et / ou de la structure de la voie de circulation.

5. Procédé selon la revendication 1 **caractérisé par le fait que** la longueur du trajet d'écartement peut être modifiée en fonction des conditions de luminosité et / ou des conditions de visibilité.

6. Procédé selon la revendication 1 **caractérisé par le fait qu'**il est prévu un deuxième affichage de direction permettant d'afficher des dessins abstraits de croisements,
qu'on utilise, pour le pilotage, le premier et / ou le deuxième affichage de direction en fonction des informations de navigation disponibles pour l'environnement de la position respective du véhicule,
le premier affichage de direction étant notamment prévu pour le pilotage dans des environnements partiellement numérisés et le deuxième affichage de direction, notamment pour le pilotage dans des environnements entièrement numérisés.

7. Procédé selon la revendication 1 **caractérisé par le fait que**, pour le pilotage dans le cas de tracés de voies de circulation pouvant être fixés au préalable, notamment dans le cas de croisements en ronds-points avec plusieurs embranchements, le premier et le deuxième affichage de direction sont utilisés simultanément.

8. Système de navigation pour véhicules, comportant un circuit de traitement informatique permettant
- de calculer un itinéraire,
- de déterminer la position du véhicule au moyen de au moins un signal de détecteur et un dispositif d'édition permettant d'éditer des informations de direction délivrées par le circuit de traitement informatique, **caractérisé par le fait que**
- le circuit de traitement informatique est prévu pour délivrer, au dispositif d'édition, des premières informations de direction pour un premier affichage de direction,
- le dispositif d'édition est prévu pour afficher le premier affichage de direction, le premier affichage de direction indiquant la direction en ligne droite, à partir de la position momentanée du véhicule, vers un point de référence distant se trouvant sur l'itinéraire et éloigné de la position respective du véhicule d'un trajet d'écartement.

9. Système de navigation pour véhicules selon la revendication 8 **caractérisé par le fait**
**que** le circuit de traitement informatique est prévu pour délivrer au dispositif d'édition des deuxièmes informations de direction renfermant des représentations abstraites de croisements pour un deuxième affichage de direction,
**que** le circuit de traitement informatique délivre au dispositif d'édition les premières et / ou les deuxièmes informations de direction en fonction des informations de navigation disponibles pour l'environnement de la position respective du véhicule,
**que** le dispositif d'édition est prévu d'une façon correspondante pour l'affichage du premier et / ou du deuxième affichage de direction, le premier affichage de direction étant notamment prévu pour le pilotage dans des environnements partiellement numérisés et le deuxième affichage de direction étant notamment prévu pour le pilotage dans des environnements entièrement numérisés.

10. Véhicule comportant un système de navigation selon la revendication 8.
